# EUROPEAN PATENT APPLICATION

(11) **EP 3 028 613 A2**
(43) Date of publication of application: **08.06.2016**
(21) Application number: 15181886.1
(22) Date of filing: 20.08.2015
(51) Int. Cl.: A47J 37/06, A21B 5/02, A21D 13/00

(54) **METHOD OF MAKING SHAPED SNACK FOOD PRODUCTS**

(30) Priority: 20.08.2014 GB 201414826
(71) Applicant: UNITED BISCUITS (UK) LIMITED, Hayes, Middlesex UB4 8EE (GB)
(72) Inventor: Sindall, John, London, W51SP (GB); Cicerelli, Lucio, Marlow, SL7 2NX (GB); Bollom, Christopher, Bath, BA1 5TE (GB)
(74) Representative: Humphreys, Ceris Anne

(57) **Abstract**

The present invention relates to a process of making a snack product. The process comprises: a) preparing a flowable batter comprising at least one cereal flour and water, the batter comprising not less than 20% by weight cereal flour and not more than 15% by weight sugar, based on the total batter weight excluding water; the batter having a viscosity at 20 °C of from 20 to 80 Pa sec; b) placing an aliquot of the batter onto a lower plate; c)permitting the batter to flow outwardly over the curved plate to form a curved body; d) applying to an upper surface of the batter an upper plate of a configuration generally conforming to that of the lower plate; e) cooking the batter for a period of time; and f) removing cooked pieces (1).

## Description

The present invention relates to the manufacture of food products and the food products produced thereby. More particularly, but not exclusively, this invention relates to processes for making snack products, especially bagged snacks. The invention also concerns the snack products made thereby.

There is an ever-increasing variety of convenience foods available to the consumer, fulfilling a wide range of tastes. The phenomenon of "snacking" or "eating on the go" has become more prevalent in recent years. Food products suitable for use in such scenarios include biscuits and snack products. Snack products are frequently in the form of bagged snacks, in which a multiplicity of individual pieces are sealed within a bag. The bags may be in the form of individual portions, for example containing from 12 to 50g of snack product. Bags containing multiple portions for sharing, for example from 75 to 200g, are also available.

Biscuits are also a popular food product for eating "on the go". Most biscuits are sold in an airtight pack, and may be organised in a set configuration, for example a single stack, or in groups within a tray housed within the pack. Some smaller biscuits are sold in bags, in which they are freely movable in the same way as bagged snacks.

It is a disadvantage common to many snack products and biscuits that they are considered to be relatively unhealthy. Many of the most popular snack products are fried, resulting in high fat contents and, in the case of some starchy ingredients, increasing the formation of acrylamide. Sweet biscuits characteristically are high in sugar and fat. Savoury biscuits can sometimes be high in salt, whilst lower-salt savoury biscuits are often considered to be of fairly bland flavour and typically considered to be an accompaniment to a stronger-flavoured food such as cheeses.

Biscuits and fabricated snacks are conventionally made by processes in which a dough is formed and shaped into a piece which is then cooked.

For many snack products and biscuits, it is a disadvantage that, in many of the manufacturing methods conventionally used, the scope for varying the contents of fat and sugar are subject to the technical limitations of the processes, in which the viscoelastic properties of a dough typically play a key part in achieving the desired biscuit or snack shape.

Also known are wafers, which are made using a flowable batter. The batter is deposited onto or into a shaped receptacle, which is closed with a lid, the lidded receptacle determining the shape of the final product. The wafer process enables a variety of different patterns to be formed on the wafer surface by means of the flowable batter being conformed to embossed surfaces of the receptacle and lid. Wafers are light in texture but lack many of the attractive organoleptic qualities of biscuits and snack products. They are often used as an adjunct for another food of different flavour and/or texture, for example with ice cream or with sugar cream or other flavoured cream fillings.

There remains a need for snack products that provide new organoleptic experiences, whilst offering versatility in terms of manufacture. There is furthermore a need for attractive and tasty products which have a better nutritional profile, for example contain less fat and/or less sugar, than comparable conventional biscuits or snack products.

According to the present invention, there is provided a snack product comprising a cooked food piece of at least in part non-planar configuration having a moisture content of not exceeding 8% by weight and a sugar content of not more than 15% by weight, the cooked food piece comprising at least 20% by weight cereal flour, and having a dry toughness in the range of from 0 to 250 kg sec and a wet toughness in the range of from 0 to 35 kg sec.

It has been found that, surprisingly, the snack product of the present invention offers unique texture. It offers in a snack product a combination of the lightness of a wafer and crispness of a biscuit. When consumed by the consumer, it delivers an initial crispiness/crunchiness followed by a "melt-in-the-mouth" breakdown. Without being bound by theory, it is believed that the dry toughness range together with the wet toughness range of the snack product of the present invention characterises snack products that are crispy when cooked, yet easy to melt down in the mouth when consumed, without having the high fat contents which are conventionally commonly used to generate the desired "melting" qualities on consumption. The ability to achieve this "melting" texture with relatively low fat content means the product can be made easily without frying. The products are likely in some cases also to have low acrylamide content as compared with snack products with similar ingredients that have been fried.

Preferably, the snack product of the present invention has a dry toughness in a range from 0 to 200 kg sec and has a wet toughness in a range from 0 to 30 kg sec. More preferably, the snack product of the present invention has a dry toughness in a range from 1 to 175 kg sec and has a wet toughness in a range from 1 to 25 kg sec, or 1 to 20 kg sec, for example 1 to 10 kg sec.

The parameters "dry toughness" and "wet toughness" correlate with the manner in which the product breaks down on application of force. Wet toughness is determined in the presence of water and provides an indicator of the manner of breakdown in response to the application of force in a moist environment, thereby reflecting the environment on eating. In food products of the type concerned, toughness is not, or is only minimally, influenced by the thickness of the product, for a given product shape, and is related principally to internal structural features of the food product such as the void structure, thickness of internal webs between voids, and crumb structure.

The following terms common in the field of sensory evaluation (as defined in ISO 5492:1992) are used in this specification:
Fracturability: Mechanical textural attribute related to cohesiveness and to the force necessary to break a product into crumbs or pieces;
Crispiness: defined as having a high level of fracturability; and
Crunchiness: defined as having a moderate level of fracturability.
"Melting" and "Melt in the mouth" are used herein to refer to the behaviour of the food product in the mouth when it is submitted to mastication, determined by the period of time and the number of chews necessary to melt the product. Thus, a product which disintegrates in a relatively short period of time with a lower number of chews has better melting properties than one in which under the same conditions the period of time and number of chews required to melt the product is higher.

The products of the invention comprise at least one cereal flour, said at least one cereal flour being present in an amount of not less than 20% by weight, preferably not less than 30% by weight, more preferably not less than 40% by weight, based on the total weight of the product. It will be apparent that, in the cooked product, the cereal flour is not present as flour per se but in cooked form incorporated within the internal crumb structure of the product. The product may contain two or more cereal flours, in which case the total amount of all the cereal flours present will be not less than 20% by weight, preferably not less than 30% by weight, more preferably not less than 40% by weight, based on the total product weight, although one or more of the cereal flours present may each individually be present in amounts smaller than 20% by weight. Suitable cereal flours for use in the snack product of the invention include wheat flour, optionally in the form of or including wholemeal wheat flour, rice flour, maize flour, and oat flour. One or more other cereal flours may be used in the product of the invention but, when present, is or are preferably included only as an additional cereal flour. Other grain flours or vegetable flours may also be present in addition to the cereal flour. Illustrative additional cereal, grain or vegetable flours include for example spelt flour, rye flour, quinoa flour, buckwheat flour.

Preferably the at least one flour comprises wheat flour, the flour of *triticum aestivum,* optionally but not necessarily with one or more further cereal flours. It may be advantageous for the cereal flour to include a proportion, preferably not more than half, of waxy wheat flour. The use of a proportion of waxy wheat flour is believed to impart textural advantages. In some embodiments of invention, the cereal flour is or includes wholemeal flour. Snack products made from wholemeal flour are advantageous in having enhanced nutritional value.

Any suitable grades of flour may be used, for example, those suitable for use in the manufacture of biscuits, bread or cakes. In certain especially preferred products of the invention, the amount of cereal flour present is at least 35% by weight, based on the total product weight. Advantageously, the total amount of cereal flour present is not more than 90% by weight, for example not more than 85%, especially not more than 80% by weight based on the total weight of the product. The inventors have found that certain advantageous embodiments of the invention are characterised by viscosity values determinable by analysis using the rapid pasting method. The rapid pasting method is preferably carried out using a Rapid Visco Analyser (RVA) as described in more detail in the Examples section below.

In the RVA rapid pasting method a product is examined according to a predetermined profile in which a sample dispersed in water is subjected to stirring and subjected to heating to a temperature substantially exceeding the starch gelatinisation temperature and maintained at that temperature for a certain period of time before reducing the temperature again. The viscosity profile is measured on a Rapid Visco-Analyser by measuring the viscosity value of a cooked product, in a stirred dispersion in water, under a temperature profile. The temperature profile used for determining measured RVA values given in this specification comprises, in sequence: a) holding the temperature at 25 °C for 2 minutes; b) over 5 minutes linearly increasing the temperature to 95 °C; c) holding the temperature at 95 °C for 3 minutes; and d) over 5 minutes linearly reducing the temperature to 25 °C; and (e) holding the temperature at 25 °C for 5 minutes.

Where used for analysis of cooked, starch-containing products, a characteristic feature of the RVA analysis plot of viscosity against time is a relatively sharp first viscosity peak (of which the maximum value gives the "Peak viscosity") corresponding to a rapid onset of gelatinisation of any ungelatinised starch in the product, followed by decay of the viscosity due to breakdown of the starch on continued stirring. On reduction of temperature (step (d) above), a second, but flatter peak in viscosity (the maximum of which is the "Final viscosity") is observed resulting from reordering/recrystallisation of the starch molecules. The first peak (Peak Viscosity) may be absent if there is no ungelatinised starch remaining in the cooked product. The time corresponding to the start point of the peak depends on the proportion of native (ungelatinised) starch in the product. Different types of starch have different pasting profiles. For example, potato starch starts gelatinisation earlier than tapioca starch, maize starch and wheat starch. Ingredients in the recipe may also affect the gelatinisation process. For example, sugar generally makes the gelatinisation process more difficult, e.g. typically requiring a higher temperature. The Final Viscosity may be higher or lower than the Peak Viscosity value.

Certain preferred products according to the invention comprise ungelatinised starch. It is in particular advantageous in savoury snack products according to the invention, for ungelatinised starch to be present in material amounts. This is easily measurable using the RVA pasting method especially for products of the invention having not more than 10% by weight, and preferably not more than 5 % by weight added sugar. Advantageously, the ungelatinised starch is present in such products in an amount such that the Peak Viscosity as measured by RVA pasting method is at least 1800 cP, preferably at least 2000 cP. More preferably the Peak Viscosity is at least 2400 cP, optionally from 2400 to 3400cP. It is believed that a Peak Viscosity exceeding 1800 cP, for example exceeding 2000cP, especially exceeding 2400cP, in the products of the invention characterises products having particularly advantageous textural properties. Ungelatinised starch normally exhibits a pasty texture (like dried flour) on eating. Conventional snack products may contain a high sugar and/or fat content in order to help them melt and be carried away when they are submitted to mastication. Many conventional snack products do not include material amounts of ungelatinised starch. For example snack products made from raw potato are cooked in disruptive cooking processes, for example frying, in the presence of high water content, owing to the high inherent water content of raw potato, whilst fabricated snack products typically are made using a high proportion of pregelatinised starchy materials.

Surprisingly, it has been found that certain snack products according to one advantageous embodiment of the invention having a proportion of ungelatinised starch have a unique melt in the mouth texture. The RVA profile of the preferred snack products of the invention is different from those of other commercial snack products, in particular those based primarily on potato.

The specified Peak Viscosity value of 1800cP or higher is achievable by selection of suitable conditions of manufacture, and in particular is achievable using the process claimed herein in which a batter comprising a wheat flour is cooked between two shaped heating members using cooking temperatures and times and batter moisture contents which are chosen such that a proportion of the starch present will remain ungelatinised.

Peak Viscosity and Final Viscosity values herein are as measured using the RVA profile defined herein.

Preferably, the snack product according to the present invention has a fat content not exceeding 30% by weight, for example not exceeding 25% by weight, each based on the total weight of the product. In many preferred products of the invention the fat content is not more than 20% by weight, especially not more than 15 % by weight.

Optionally, the snack product according to the present invention further comprises flavouring agents. Such flavouring agents may be inclusions, for example particulate flavourings dispersed in or applied to the product, purees, coating or drizzle flavouring agents and/or dust-on flavouring agents. It has been found that flavouring agents not only modify the overall flavour of the final product, but may also improve the aesthetic appeal of it. Some flavouring agents, for example cheese flavour and fruit derived material, also enhance the nutritional value of the product. If desired the snack product may incorporate a sweet flavouring agent or inclusion, but in selecting appropriate flavouring agents and inclusions due regard will need to be given to the sugar content.

Suitable inclusion flavouring agents include, but not limited to, herbs and spices, for example dried chives, poppy seeds, caraway seeds, cumin, black pepper, red pepper, basil, coriander, ground cinnamon, piri piri seasoning, jerk seasoning, chopped garlic, paprika, Korma curry spice blend, Chinese 5 spice, Italian mixed herbs, sunflower seeds, or a combination thereof; liquid flavours, for example garlic, salted caramel, almond, chocolate, speculoos, hazelnut, ginger, or a combination thereof; nuts/vegetables, for example mushroom, beetroot, carrot, ground almonds, nibbed almonds, desiccated coconut, bran, ground pecan nuts, or a combination thereof; powders, for example cheese powder (vegetarian or non-vegetarian), cheese flavour, whey powder, deactivated yeast, potato dehydrates, sweet chilli, cocoa powder, egg powder, or a combination thereof; other inclusion or puree flavouring agents, for example horseradish sauce, white/dark chocolate chips, beef jerky, bacon jerky, soup powders, peanut butter, or a combination thereof. Where present, potato dehydrates are present as no more than one third of the total amount of potato dehydrates and cereal flour.

Suitable coating or drizzle flavouring agents include, but are not limited to, milk chocolate, dark chocolate, white chocolate, natural yoghurt, dried yoghurt (with or without crispy fruit slices), or a combination thereof. Coatings may be applied to all, or solely to a part, of the snack product.

Inclusions, which will normally be present as particles in the snack product, are used in the form of particulate material of which at least most and preferably all particles are of particle diameter not exceeding 3mm, as determined by ability to pass through a mesh with 3mm openings.

Suitable dust on flavouring agents include, but are not limited to, cheese, cheese and onion, salt and vinegar, roast chicken, lemon, black pepper, salt, or a combination thereof.

Optionally, the flavouring agents may be incorporated into a batter for manufacture of the snack product before cooking. Where present, the flavouring agents may be incorporated into the batter at an amount of up to 10% by weight, preferably no more than 5% by weight, and for example from 0.1% to 5% by weight, more preferably from 0.1% to 4% by weight, in each case based on the total weight of the batter.

Optionally, the, or additional, flavouring agents are applied to at least one surface of the snack product after cooking. If desired, the flavouring agents are applied to both surfaces of the snack product after cooking. Preferably, the flavouring agents are applied to the surface(s) of the snack product at an amount up to 10% by weight, preferably no more than 5% by weight, and for example from 0.1% to 5% by weight, more preferably from 0.1% to 4% by weight, in each case based on the total weight of the product. It may be expedient for applied flavourings to be incorporated in a suitable carrier, for example an oil. It is preferred that the total amount of flavouring, including incorporated flavouring and surface applied flavouring where both are present, does not exceed about 10% of the total product weight.

The snack product according to the present invention advantageously has a finer cell structure when compared to other processed snack products, for example fried snack products or standard wafer products. The finer cell structure is believed to contribute to the lightness and melt-in-the-mouth feature of the snack product. Preferably, the snack product according to the present invention has an air cell structure which has at least 6 cells/mm², preferably at least 7 cells/mm², more preferably at least 8 cells/mm². For example, the snack product according to the present invention may have an air cell structure of from 6 to 50 cells/mm², preferably from 6 to 20 cells/mm², more preferably from 7 to 10 cells/mm², such as from 8 to 9.5 cells/mm². The number of cells/mm² may be, for example, an average value of the numbers of cells/mm² determined by inspection of 10 different cross sections across a sample of the snack product. The number of cells/mm² may, for example, be determined from analysis of the snack product sample using the C-Cell Imaging System by Calibre Control International Limited.

In some embodiments other additives or processing aids may be used. For example, raising agents may be used to generate larger voids and/or a greater number of voids within the cooked product, giving a lighter texture, or there may be used reducing agents to improve the texture, or colorants to enhance product colour.

The snack product of the present invention is at least in part of non-planar configuration. The pieces are preferably at least in part of curviplanar configuration. The term "curviplanar" is used herein to refer to a body that is curvedly deflected from a planar configuration, for example in the manner of a curved, non-planar disc or a curved panel. In preferred biscuit or snack products of the invention, the pieces are of curviplanar configuration in which opposed major faces are in register and essentially parallel, and form a curved or undulating configuration. Curviplanar configurations are known in relation to certain savoury snacks, for example, potato crisps, fabricated potato chips, and tortilla chips, including randomly curviplanar snacks such as potato crisps made from raw slices of potato, or mechanically shaped fabricated snacks typically made using a mould or other constraint during forming and/or cooking.

In certain preferred embodiments a snack product is of curviplanar configuration having a first, curved, major surface, a second, curved, major surface parallel to and in register with the first major surface and a perimeter surface extending between said first and second major surfaces, the first and second surfaces advantageously being essentially uniformly spaced from one another throughout their areas. Advantageously, the first surface is convexly curved and the opposed second surface is concavely curved. Advantageously, the snack product has a thickness, as measured between said opposed surfaces, of not more than 5mm, excluding any embossed structures that only partially cover one or more of said opposed surfaces.

In some embodiments, the cooked food piece is curviplanar and has a substantially uniform radius of curvature. In other embodiments, the cooked food piece is curviplanar with a radius of curvature which varies across the food piece. Advantageously, the radius of curvature across at least a major part of the piece is in the range of from 15mm to 30mm. The curved configuration of the snack pieces advantageously contributes to the texture, for example changing the perceived texture on biting, as well as imparting an appealing appearance.

Advantageously the cooked piece has a thickness, as measured between said opposed surfaces, of from 1mm to 5mm. Where ridges or other embossed structures are intermittently provided on the opposed surfaces as further described below, thickness values stated herein do not include those ridges or other structures. Preferably, the thickness of the snack product of the present invention is from 1mm to 4mm, more preferably from 1mm to 3mm, and especially 2mm to 3mm. The thickness of the snack product helps to maintain the curved shape of the product, and, with the curved configuration, to achieve required texture.

In some preferred embodiments of the present invention, the snack product is smooth on both surfaces. In other embodiments, at least one of the surfaces of the piece may comprise an embossed pattern. The embossed pattern may comprise a plurality of ridges extending along the axial direction of the product on at least one surface. In another embodiment of the present invention, the snack product is smooth on one surface and is ridged on the other surface. In yet another embodiment of the present invention, the snack product is ridged on both surfaces. Other embossed patterns may include, for example, written material or images, for example trade marks, straplines or logos. The inclusion of embossed patterns on one or both surfaces may generate textural variation across the piece, thus advantageously contributing additional textural effects.

In another advantageous embodiment, the cooked piece is both curviplanar piece and corrugated. The corrugations may comprise a series of parallel ridges and troughs, with adjacent peaks being at a uniform separation ("pitch") or with the pitch being variable across the cooked food piece. Superimposition of the corrugated micro-configuration on the curviplanar overall configuration may lead to particularly interesting textural effects.

In respect of a curviplanar piece or region having a first convexly curved surface and an opposed second concavely curved surface the term "radius of curvature" used herein is to be understood to mean the radius of curvature of the concavely curved surface. Where the radius of curvature is not uniform it is to be taken as the mean value of at least three measured values of the radius measured at different regions of the outer surface. The radius of curvature does not include any protrusions, such as ridges or embossed patterns, present on the outer surface. Where a surface is contoured rather than smooth, raised areas will be considered to be embossed regions raised with reference to the product surface if the raised areas are of total area less than the areas that, by comparison, are not raised.

It has been found that a curved shape of the snack product helps to achieve an attractive visual result for not only the snack product but also the package containing the snack product which is given an attractive plumper appearance through the containment of multiple curved pieces. The radius of curvature of the products of the invention may in some advantageous embodiments be in the range of 15 to 30mm, with a radius of curvature in the range of 18 to 28mm being especially preferred. Advantageously, the radius of curvature and size are such that the cooked snack product subtends an angle of from 20° to 120°, for example 20° to 90°.

As already mentioned, it is within the ambit of the invention for the product to be formed with a crinkled or corrugated configuration. In that case, the concave surface, for the purposed of determining the radius of curvature, is to be considered as the envelope defined by the peaks of the ridges on the concave surface. The thickness of such crinkled or corrugated snacks pieces is to be considered as the distance between the planes extending tangentially to, respectively, a peak of a ridge and the bottom of a trough adjacent thereto.

The ridged and corrugated configurations are advantageous in providing increased surface area, facilitating incorporation of flavouring agents and/or enabling larger amounts of flavouring to be retained. They may also contribute to a desirable and different texture with commensurately different eating experience. For example, the provision of ridges on one or both surfaces, or corrugations, causes variation in the breaking characteristics in different directions, whilst provision of ridges on one surface only may lead to a different flavour experience as a result of different amounts and distributions of flavouring as between the surfaces.

The overall shape of the product when viewed towards the major surfaces can be chosen without limitation. The snack product may in some embodiments be of generally circular or oval disc-shape. In other embodiments, the snack product may be of generally square, rectangular or triangular shape. In one embodiment, the snack product is of elongate configuration whereby an extended holding area and a scoop region are provided. The snack product preferably has a maximum product width of from 20 to 60 mm, preferably from 20 to 50mm, more preferably from 30 to 40mm and a minimum product width of not less than a third of said maximum product width. In some variants, for example where the piece incorporates a scoop portion, the body may have a larger width, for example up to 100mm.

Whilst many of the products of the invention will desirably be savoury snack products, the invention may also include certain products that may be perceived as sweet or semi-sweet. Advantageously, the snack product comprises less than 5% by weight of sugar. If desired, however, the product may contain up to 15% by weight of sugar, more preferably less than 10% by weight of sugar, in each case based on the total product weight. In this specification "sugar" is to be understood as referring to mono and disaccharides including those found in syrups. For example, sugar may be or include sucrose, e.g. as icing sugar, granulated sugar etc; or may be selected from the wide range of sugar syrups or other sugar sources available including for example honeys, partially inverted sugar syrups, glucose-fructose syrup, glucose syrup such as 63 DE and 42 DE glucose syrups, maple syrup, high fructose corn syrup, and liquid sugar. The biscuit or snack product may also include one or more natural or artificial sweeteners, sugar substitutes such as high intensity sweeteners (natural and synthetic) and polyol (sugar alcohols) such as sorbitol, maltitol, isomalt, etc. Polyols and/or high intensity sweeteners may be used in combination with sugar.

For the avoidance of doubt, the invention includes sweet snack products that have a sweetness that is wholly or substantially achieved through the use of synthetic or natural sweeteners other than sugar(s).

The snack product of the present invention is preferably savoury.

Optionally, the snack product comprises 0.1 to 7.5 by weight of added salt, preferably 0.1 to 5.0 by weight of added salt, more preferably 0.1 to 3.0 by weight of added salt, in each case based on the total product weight. "Added salt" is to be understood as referring to salt which is added as an ingredient per se or as an ingredient of a flavouring and is to be understood as extending to salt replacers, and does not include any salt which is inherently present in minor amounts, for example in flour or flavouring compositions incorporated within the product. However, salt added alone or as a component of a flavouring added after cooking is included.

The preferred savoury snack product of the present invention provides enhanced consumer experience due to its unique texture of initial crisp/crunch bite and "melt in the mouth" breakdown. Preferred savoury snack products of the invention having a fat content of not more than 20% may have improved nutritionals as compared with many conventional snack products.

It is also advantageous in certain products of the invention that the inclusion of flavouring and/or inclusions allows for good "baked-in" flavouring, giving for example the potential for more intense or longer-lasting flavour delivery as a result of incorporation inside the product.

The present invention also provides a process of making a snack product comprising:
a. Preparing a flowable batter comprising at least one cereal flour and water, the batter comprising not less than 20% by weight cereal flour, based on the total batter weight excluding water; the batter having a viscosity at 20°C of from 20 to 80 Pa sec;
b. Placing an aliquot of said batter onto a lower plate;
c. Permitting said batter to flow outwardly to form a curved body;
d. Applying to an upper surface of the batter an upper plate of a configuration generally conforming to that of the lower plate;
e. Cooking said batter by means of heating at least one of said lower and upper plates;
f. Removing the cooked pieces;

The process of the invention may be used to produce a snack product having a texture such that the dry toughness is in the range of from 0 to 250 kg sec and the wet toughness is in the range of from 0 to 35 kg sec, preferably the wet toughness is in the range of from 0 to 20 kg sec.

The process of the invention, in which the process ingredients are incorporated in a flowable batter, enables the relative amounts of ingredients to be varied without regard to the strict limits opposed by the need to consider the viscoelastic properties that are a limitation of snack manufacturing methods using many prior art methods that include one of more of sheeting/cutting, rotary moulding, extrusion cooking, air expansion, and frying. This opens the possibility of using, for example recipes which are generally similar to those of snack products that are conventionally made by, for example, sheeting or moulding, whilst being able to tailor the recipe according to desired nutritional outcomes. For example, it may be possible to use reduced amounts of fat thereby enabling improved nutritionals to be achieved, although the invention is not limited to processes including such improvements in nutritional profile.

In some embodiments of the present invention, the recipes of the flowable batter are derived from biscuit recipes. The flowable batter of the invention has a higher viscosity than standard wafer batters and therefore it is believed that it is suitable for being applied on a plate to form a curved body without flowing off the plate. The unique process of the invention, for example the specified batter viscosity range, is also believed to result in the required crunchiness and crispness of the product.

Optionally, the flowable batter of the present invention has a specific gravity (using water as reference) of from 0.90 to 2.00, preferably from 1.00 to 1.50, more preferably from 1.05 to 1.45, most preferably from 1.10 to 1.40, for example from 1.14 to 1.37. In some embodiments of the present invention, the flowable batter has a specific gravity of from 1.20 to 1.50, such as from 1.21 to 1.40. It is believed that the specific gravity value indicates the density of the flowable batter. The flowable batter of the present invention has been found to entrain less air during mixing and therefore resulting in smaller air cells and finer air cell structure in the cooked snack product.

Specific gravity is the ratio of the density of the flowable batter to the density of a reference substance. Water is used as a reference substance when calculating specific gravity of the flowable batter of the present invention. The specific gravity of the flowable batter is measured according to the method described below:
1) the weight of a sample pot is measured;
2) the sample pot is filled with water and the weight of the sample pot with water is measured;
3) the same sample pot is filled with the flowable batter and the weight of the sample pot with the batter is measured;
4) calculating the weight of the water and the weight of the batter;
5) calculating specific gravity by dividing the weight of the batter by the weight of the water.

The process optionally includes applying oil and/or flavouring to at least one surface of the pieces. Optionally, the flowable batter comprises not less than 22% by weight cereal flour, preferably not less than 25% by weight cereal flour, each based on the total batter weight excluding water. For the manufacture of snack products comprising sugar and/or sweeteners those are advantageously included in the batter. Additionally or instead, the batter may include further ingredients selected from salt, salt replacers, flavourings and inclusions (for example any one or more of the illustrative flavourings and inclusions already mentioned above). It may also be advantageous for the batter to include one or more processing aids. For example, the batter may further optionally include one or more ingredients for controlling viscosity or enhancing flow properties of the batter. Non-limiting examples of suitable processing aids include enzymes such as food grade protease which may be used to improve batter homogeneity, and reducing agents.

The flowable batter has a viscosity at 20°C of from 20 to 80 pa sec, preferably from 20 to 60 Pa sec, more preferably from 22 to 60 Pa sec, for example from 25 to 30 Pa sec. If deposited onto the plate at a temperature substantially different to 20°C the batter viscosity will expediently be adapted to be within at least one of the above indicated ranges at the temperature of deposition. In some embodiments batter with viscosities in the range of from 10 to 50 Pa Sec has been used.

Optionally, the lower plate and/or the upper plate is heated to a temperature of from 130 °C to 200 °C, for example from 130 °C to 180 °C.

Optionally, both the lower plate and the upper plate are of curved configuration. In some embodiments, the lower plate and/or the upper plate comprise an embossed surface, for example recesses adapted to form ridges or other surface embossment on the product.

Optionally, the batter is cooked for from 45 to 120 seconds, preferably from 45 to 90 seconds. Longer cooking times may be preferred for batters comprising inclusions requiring a degree of cooking, for example of fruit pieces may require longer cooking time. The selection of appropriate temperatures and cooking times will be a routine matter for those skilled in the art.

It will of course be appreciated that features described in relation to the product of the present invention may be incorporated into the process of the present invention. For example, the process of the invention may incorporate any of the features described with reference to the product of the invention, including but not limited to details of the flour, optional flavouring agents, shape and dimension of the cooked pieces, and *vice versa.*

According to the present invention, there is also provided a bagged snack product comprising a multiplicity of cooked pieces, the cooked pieces being snack products according to the present invention. The cooked pieces may be of generally the same shape and dimensions or, in one embodiment, may comprise a mixture of cooked pieces of different sizes and/or shapes, thereby adding to consumer interest. Inclusion of multiple pieces of different size and shape may also help ease of depositing as the need for strict control on the shape and volume of depositing batter aliquots is reduced.

It will of course be appreciated that features described in relation to the process of the present invention may be incorporated into the product of the present invention. For example, the process of the invention may incorporate any of the features described with reference to the product of the invention and *vice versa.*

Embodiments of the present invention will now be described by way of illustration only with reference to the accompanying schematic drawings of which:
- Figure 1: is a side view of a snack piece according to a first embodiment of the invention;
- Figure 2: is a side view of a snack piece according to a second embodiment of the invention;
- Figure 3: is a side view of a snack piece according to a third embodiment of the invention; and
- Figure 4: is a sample RVA curve showing a profile for a conventional starchy food product.

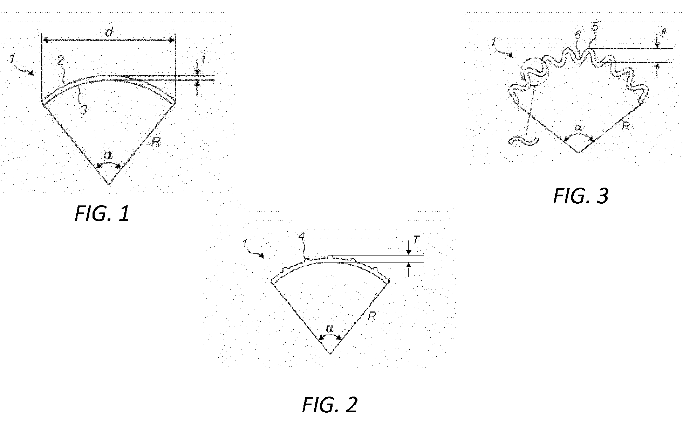

With reference to Fig. 1, in an illustrative embodiment of the invention a snack product comprises an arcuately curved curviplanar piece 1. In the embodiment shown, the piece is curved with a constant radius of curvature, such that the piece 1 can be considered to form a portion of the wall of a notional hollow cylinder. In other embodiments the radius of curvature may, compared with the piece 1, vary in the circumferential direction or in the axial direction, wherein "circumferential" and "axial" are defined with reference to the said notional hollow cylinder. The piece 1 has an outer, convex wall 2 and an inner, concave wall 3. The convex and concave walls are, in the embodiment of Fig. 1, smooth, whereby the separation between the wall 2 and wall 3 is uniform. The radius of curvature is indicated by the letter "R", and the thickness of the product by the letter "t". The overall width of the piece is indicated by the letter "d". In an exemplary product, the radius of curvature is 23 mm, the overall width d is 35mm and the thickness t is 2.5mm.

In the illustrative embodiment of Fig. 2, the snack piece is of generally similar configuration to that of Fig. 1 except that parallel ridges 4 extend along the convex surface in the axial direction. The concave surface is smooth. In further variants, parallel ridges 4' (not shown) could similarly be provided over the concave surface. The ridges 4' may be parallel to the ridges 4, or may extend in a different orientation. In the embodiment of Fig. 2 the thickness of the piece t is considered to be the thickness disregarding ridges, and is preferably not more than about 5mm especially not more than 4mm. The thickness including the ridges is designated in Fig. 2 with the value T, which may be for example up to 6mm. Instead of the ridges 4, there may if desired be provided any other embossed pattern, for example, in the form of written material, including logos and/or other trade mark material.

In the embodiment of Fig. 3, the entire piece is of wavy configuration, by virtue of the formation of ridges and troughs on both sides, the ridges on one side being aligned with the troughs on the other. In the case of the product of Fig. 3, the thickness t' is determined by measuring the difference between the top of the peak 5 and the bottom of the adjacent trough 6. The pitch of the ridges and troughs (corresponding to the distance between adjacent ridges) may be uniform, or may vary across the product, such variation providing variations in texture.

By way of illustration, in the embodiments of Figs. 1 to 3, the radius of curvature R may be from 15 to 30mm, for example 23mm, and the angle α subtended by the concave surface may be from 10° to 120°, for example 50°. The thickness t may be, for example, 1 to 4mm and in one embodiment is approximately 2.5mm. If desired, the thickness (not including any embossed ridges or other patterns) may vary across the piece. The width d may be by way of illustration 10 to 60mm, for example, 30 to 40mm. In some variants, for example where the piece incorporates a scoop portion, the body may have a larger value of d, for example up to 100mm.In the embodiments of Figs. 2 and 3, the pieces are curved with a constant radius of curvature, such that the piece 1 can be considered to form a portion of the wall of a notional hollow cylinder. In other embodiments the radius of curvature may vary in the circumferential direction or in the axial direction, wherein "circumferential" and "axial" are defined with reference to the said notional hollow cylinder.

In some embodiments of the invention having a wavy configuration, the ridges and troughs on one side may be aligned in the axial direction with the ridges and troughs on the other side. In other embodiments of the invention, the ridges and troughs on one side may be parallel with, but offset relative to, the ridges and troughs on the other side whereby each ridge and each trough is flanked by a thicker side wall and a thinner side wall. In the case of the piece of Fig. 3, the ridges and troughs are disregarded for the purposes of determining the radius of curvature, with the radius being measured from the envelope defined by the peaks on the concave surface. The height dimensions measured between a peak on one surface and a trough on the same surface is, in one illustrative embodiment, from 1 to 4mm.

There will now be described certain test methods which are used in the Examples that follow.

### Test method for determination of Toughness

### (i) Dry test

The dry toughness test is performed using a standard compression test on a Stable MicroSystems (SMS) Texture Analyser (TA), which is supplied with an Ottawa cell fitting and a perforated base plate (SMA part code A/HOL). In that apparatus toughness is measured by advancing the analyser probe downwardly through the cell, which contains the sample to be measured. The analyser probe is 65mm × 65mm in size and the cell has a load capacity limit of 50 kg.

21g of sample product is measured into the Ottawa cell, randomly packed. The probe of the Analyser is moved to a height of 70mm above the base plate. The TA test settings are set to perform the test with the probe advancing by a target distance of 52mm at a speed of 2mm/sec, compressing the sample, measuring the force [kg] applied throughout the test.

A graph of force [kg] vs time [s] is plotted and the area beneath the line from the start to the end of the test is calculated [kg.sec]. This value is the 'toughness' of the dry sample.

### (ii) Wet test

The wet toughness test is performed using a variation of the standard compression test, known as a bowl-life test, on the Stable MicroSystems (SMS) Texture Analyser (TA). The Ottawa cell fitting is used with a watertight base plate (SMS Part Code A/BWB). The analyser probe is 65mm × 65mm in size and the cell has a load capacity limit of 50 kg.21g of sample product is measured into the Ottawa cell, randomly packed. 200ml of water at 20°C is added, retained for a time of 5 seconds and then drained from the cell using the standard drainage facility of the device. The probe of the Analyser is moved to a height of 70mm above the base plate. The TA test settings are set to perform the test with the probe advancing by a target distance of 52mm at a speed of 2mm/sec and compressing the sample, measuring the force [kg] applied throughout the test. A graph of force [kg] vs time [s] is plotted and the area beneath the line from the start to the end of the test is calculated [kg.sec]. This value is the 'toughness' of the wet sample.

### Test method for determination of viscosity

### (i) Viscosity of the product

The viscosity profile (Rapid Visco Analyser profile) is measured by Rapid Visco-Analyser (RVA) (model 3D) developed by Newport Scientific Corporation, and analysed with Thermal Cycle for Windows. Unless indicated to the contrary, RVA values as referred to in this specification refer to analysis of cooked products, in which the RVA test measures the starch transformation (which is indicative of the degree of starch cooking or gelatinisation) of the tested food.

25g of water is weighed into the aluminium canister of the RVA apparatus to which 4g of ground sample is added. The sample weight is not corrected to any set moisture content. A paddle is placed in the canister, and its blade vigorously jogged up and down through the sample ten times. The RVA disperses the samples by rotating the paddle at 960 r/min for the first 10s of the test, after which the viscosity is sensed using a constant paddle rotation speed of 160 r/min. The idle temperature is set to 25°C and the following 20 min test profiles are run:
1) 25°C held for 2 min,
2) the temperature is linearly ramped up to 95°C until at 7 min,
3) the temperature is held at 95°C until 10 min,
4) the temperature is linearly ramped down to 25°C at 15 min, and
5) held at 25°C until 20 min. Heating and cooling were linearly ramped between the profile set points.

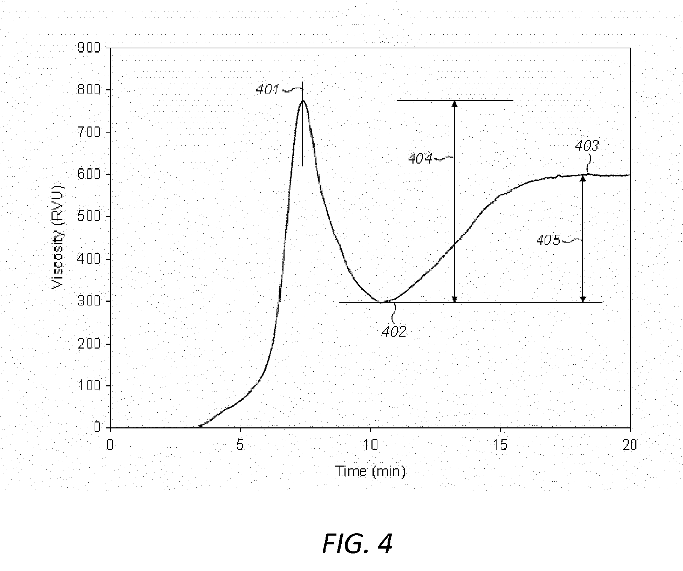

All the viscosity parameters are expressed in centipoise (10⁻³ Pa s). For comparison purposes, the values can also be expressed on the RVA device in RVU (rapid visco units). Now referring to Figure 4, RVA curve is described by five parameters, i.e. Peak 401 (peak viscosity), trough 402 (trough viscosity), Final Viscosity 403 (cool paste viscosity), breakdown 404 (defined as subtracting Trough 402 from Peak 401), setback 405 (defined as subtracting Trough 402 from Final Viscosity 403).

Approx. around 2-4 min. (when the curve starts to rise), the starch gelatinisation process begins. The Breakdown 404 is due to the breakdown of starch, due to shear (paddle still rotating, held at 95°C. The final phase (Setback, where the viscosity increases) is due to reordering and/or recrystallisation of the starch molecules (cooling phase of the method).

### (ii) Viscosity of the batter

Batter viscosity is tested using a Physica Anton Paar Air-Bearing Rheometer MCR300 and Rheoplus US200 software.

The sample batter is placed between two parallel plates, diameter 50mm at a temperature of 20 °C to a sufficient amount that, on compression to the required measurement gap, it completely covers both plates. The plates are moved to a measuring gap of 2mm and any excess batter is trimmed from the sample. The edge of the plate is then covered in silicone gel to prevent any moisture passing to or from the sample while the test is performed.

The test is performed in two stages:
1) Top plate rotates at a strain of 0.1 revs/s for 30 seconds to equilibrate temperature throughout the sample;
2)The strain rate is increased from 0.1-20 revs/s and 12 points are plotted every 10 seconds as a measure of stress, up to a total time of 2 minutes.

The software uses the analysis tool 'Ostwald I' to work out the viscosity of the sample.

### Examples

The Examples below are by way of illustration only. Unless otherwise indicated, values in % are % by weight based on the total weight.

### Examples 1 to 3 - Method

The ingredients are mixed using a Metcalfe Mixer (standard gear driven planetary mixer) in a three step process.

Stage 1: The sugar (if any) and other minor recipe ingredients are mixed with water in stage 1.

Stage 2: starch based and flavour ingredients are added in stage 2, followed by brief mixing.

Stage 3: Fat, and inclusions (if any) are added in stage 3.

The ingredients are mixed in the mixture at speed 7 for 30 seconds to give the desired final batter viscosity. Viscosities of the Examples below are within the range of from 20 to 80 Pa sec.

Mixing is performed at ambient temperature. Wafer batter is deposited on wafer plates from a depositing device.

In these Examples the plates used had smooth surfaces or surfaces with spaced ridges and were curved, the bottom plate being formed by a part of the circumferential surface of a cylinder, and having a radius of curvature of 23mm. The top plate was of a curved configuration so as to form in cooperation with the bottom plate a cavity throughout which the spacing of the plates was uniformly 2mm. Other plate configurations may be used, the plate shape dictating final product shape and as desired having a smooth surface, or ridged surface. In the Examples described below the plates are both heated. The upper plate is heated to 176 °C and the bottom plate is heated to 165 °C. The target thickness after cooking is 2mm.

The batter is cooked for between 45 - 90 seconds depending on the recipe used and the wafers are removed from the plates for which purpose any suitable scraper arrangement can be used. The product will preferably be ejected and ordered in lanes across the plate width and/or as a stream in a conveyor.

The thickness of the pieces in the Examples below is around 2mm and the radius of curvature is around 23mm. The products each have a moisture content in the range of from 2.5 to 6.5 % by weight.

### Example 1

| Ingredient | % Total |
|---|---|
| Salt | 0.9% |
| Water | 39.2% |
| | |
| Flour (+ starch, optional) | 46.5% |
| Flavouring | 4.6% |
| | |
| Oil | 8.7% |
| | |
| Total | 100.0% |
| **Wet toughness, kg.sec** | 17.92 |
| **Dry toughness, kg.sec** | 47.09 |

The calculated sugar content of the product of Example 1, taking account of sugar in the flavouring, was about 4.7% by weight.

### Example 2

| Ingredient | % Total |
|---|---|
| Salt | 0.9% |
| Sugar | 1.3% |
| Water | 42.4% |
| Whey solids | 7.1% |
| | |
| Flour (+ starch, optional) | 46.8% |
| Flavouring | 1.6% |
| | |
| Oil | 0.0% |
| | |
| | 100.0% |
| | |
| **Wet toughness, kg.sec** | 16.51 |
| **Dry toughness, kg.sec** | 127.02 |

The calculated sugar content of the product of Example 2, taking account of sugar in the whey solids and flavouring, was about 11% by weight.

### Example 3:

| Ingredient | % Total |
|---|---|
| Salt | 0.8% |
| Sugar | 1.2% |
| Water | 34.6% |
| Whey solids | 6.3% |
| | |
| Flour (+ starch, optional) | 41.6% |
| Flavouring | 1.4% |
| | |
| Oil | 14.1% |
| | 100.0% |
| | |
| **Wet toughness, kg.sec** | 11.61 |
| **Dry toughness, kg.sec** | 26.17 |

The calculated sugar content of the product of Example 3, taking account of sugar in the whey solids and flavouring, was about 9% by weight.

The dry and wet toughness values of Examples 1 to 3 are summarised in Table 1 below. The Comparison Examples are commercial products available in the United Kingdom. The Comparison Example products are as follows:
Comparison Example A: Fabricated wholegrain ridged snack made by forming a dough into pieces and frying with fat content of ca. 20%
Comparison Example B: Rice based savoury snack made by rapid expansion of rice material within a chamber
Comparison Example C: Rice and potato based snack made by rapid hot air expansion of potato and rice pellets followed by compression under high temperature and pressure
Comparison Example D: Fried snack based on reconstituted potato material, made by frying expansion of a pellet.
Comparison Example E: Expanded snack based principally on tapioca starch made by frying expansion of pre-extruded pellets.
Comparison Example F: Fabricated potato based snack made by sheeting a dough made from potato dehydrates, cutting, shaping and frying.
Comparison Example G: Fabricated snack based on potato dehydrates and starch, made by sheeting, cutting and baking; ca. 8 % fat
Comparison Example H: Fabricated snack based on potato dehydrate and cereal flour, made by expansion of pellets; ca. 4% fat.

**Table 1: Toughness comparison**

| Example | Dry toughness kg.sec | Wet toughness kg.sec | Fat content (added) % | Sugar Content |
|---|---|---|---|---|
| Example 1 | 47.09 | 17.92 | 14.4 | 4.7 |
| Example 2 | 127.02 | 16.51 | 0 | 11 |
| Example 3 | 26.17 | 11.61 | 21.6 | 9 |
| Comparison Example A | 68.67 | 40.17 | Ca. 20 | Ca. 9 |
| Comparison Example B | Overload* | Overload* | Ca. 7.5 | Ca. 2 to 8 |
| Comparison Example C | Overload* | Overload* | Ca. 14 | Ca. 3 to 6 |
| Comparison Example D | 289.33 | 111.41 | Ca. 30 | Ca. 5 |
| Comparison Example E | 341.49 | 5.47 | Ca. 25 | Ca. 8 |
| Comparison Example F | 35.57 | 30.45 | Ca. 33 | Ca. 1.5 to 5 |
| Comparison Example G | 86.37 | 21.37 | Ca. 8 | Ca. 2 to 6.5 |
| Comparison Example H | 249.13 | 176.1 | Ca. 4 | Ca. 9 |

| | | | | |
|---|---|---|---|---|
| * "overload" indicates that the probe of the Analyser stops before completing the target distance of 52mm due to the load of the cell exceeding 50 kg. | | | | |

### Sensory Evaluation

The products of Example 3 and a number of the Comparison Examples were evaluated by a trained sensory evaluation panel of 12 people who evaluated the products using quantitative descriptive analysis (Tone et al, Sensory Evaluation Descriptive Analysis, Food Technology, 1974, p24 - 34). The sensory evaluation data is summarised in Table 2. The Comparison Examples are Comparison Examples A, C, E, F and G as described above. In informal testing the products of Examples 1 and 2 were found to share the enhanced melting qualities of Example 3.

**Table 2: Sensory evaluation**

| | Crispness | Crunchiness | Openness | Rate of Melting | Rate of Breakdown |
|---|---|---|---|---|---|
| Example 3 | 55 B | 55 D | 64 B | 63 B | 56 B |
| Comp. Example C | 65 A | 71 A | 62 B | 44 C | 47 C |
| Comp. Example H | 62 A | 64 C | 61 B | 46 C | 48 C |
| Comp. Example A | 65 A | 67 BC | 57 B | 36 D | 47 C |
| Comp. Example G | 64 A | 69 AB | 48 C | 39 D | 47 C |
| Comp. Example F | 57 B | 57 D | 49 C | 49 C | 51 C |
| Comp. Example E | 42 C | 47 E | 82 A | 78 A | 67 A |

In Table 2, the different suffix letters used indicate samples that, within each column, differ statistically significantly for the parameter in question. The snacks of the invention (Example 3) are shown in the sensory evaluation data to have a good balance between, on the one hand, crispiness/crunchiness, and on the other hand the rate of melting and rate of breakdown. In particular, the rate of melting and rate of breakdown, which correlate with consumer perception of a "melt in the mouth" texture, are shown to be considerably improved with reference to most of the conventional commercial snack products tested. In the case of Comparative Example E, exceptionally high rate of melting and rate of breakdown are observed, but are accompanied by low crunchiness and crispness. The high rate of melting and rate of breakdown of Comparative Example E are believed to be attributable to its relatively high fat content and fine texture, which in combination with the low crunchiness and low crispness do not result in the attractive combination of eating characteristics achieved in the products of the invention.

Samples of food pieces according to Examples 1 and 2 were tested using the RVA pasting method test described above. A number of the Comparison Example products were measured using the same RVA test to provide a basis for comparison. The results are shown in Table 3. As is apparent from Table 3, the tested products of the invention were found to have a Peak viscosity greater than 1800 cP.

**Table 3: RVA Data**

| Sample | Peak Viscosity | Trough Viscosity | Final Viscosity | Set-back | Peak Time (min) | Pasting Temp (°C) |
|---|---|---|---|---|---|---|
| Example 2 | 3533 | 1768 | 6594 | 4826 | 7.5 | 25.1 |
| Example 1 | 2175 | 1514 | 5539 | 4025 | 7.6 | 25.2 |
| Comp Ex C | 1642 | 680 | 1589 | 909 | 6.8 | 25.1 |
| Comp Ex H | 1166 | 336 | 748 | 412 | 4.6 | 25.0 |
| Comp Ex E | 1141 | 96 | 365 | 269 | 3.5 | 25.0 |
| Comp Ex D | 1530 | 781 | 4375 | 3594 | 10 | 25.2 |
| Comp Ex G | 2348 | 1834 | 2853 | 1019 | 7.2 | 25.0 |
| Comp Ex A | 329 | 282 | 1006 | 724 | 7.1 | 25.3 |
| Comp Ex F | 571 | 192 | 885 | 694 | 6.4 | 25.3 |

| | | | | | | |
|---|---|---|---|---|---|---|
| Viscosity units = cP (centipoise) | | | | | | |

Without being bound to theory, lower toughness values often contribute to higher rates of melting, creating the initial "melt-in-the mouth" breakdown texture, which is preferred by consumers.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A process of making a snack product, comprising:
a. Preparing a flowable batter comprising at least one cereal flour and water, the batter comprising not less than 20% by weight cereal flour and not more than 15% by weight sugar, based on the total batter weight excluding water; the batter having a viscosity at 20 °C of from 20 to 80 Pa sec;
b. Placing an aliquot of said batter onto a lower plate;
c. Permitting said batter to flow outwardly over said curved plate to form a curved body;
d. Applying to an upper surface of the batter an upper plate of a configuration generally conforming to that of the lower plate;
e. Cooking said batter for a period of time;
f. Removing cooked pieces; and
g. Optionally applying oil and/or flavouring to at least one surface of the pieces.

2. A process according to claim 1, wherein the lower curved plate comprises an embossed surface, and/or wherein the upper curved plate comprises an embossed surface.

3. A process according to claim 1 or claim 2, wherein the batter has a viscosity 20 °C of from 20 to 60 Pa sec, preferably from 25 to 30 Pa sec.

4. A snack product comprising a cooked food piece of at least in part non-planar configuration having a moisture content of not exceeding 8% by weight and a sugar content of not more than 15% by weight, the cooked food piece comprising at least 20% by weight cereal flour, and having a dry toughness in the range of from 0 to 250 kg sec and a wet toughness in the range of from 0 to 25 kg sec.

5. A snack product according to claim 4, wherein the dry toughness is in the range of from 1 to 250 kg sec, preferably from 1 to 200 kg sec, more preferably from 1 to 175 kg sec and the wet toughness is in the range of from 1 from 1 to 20 kg sec, preferably 1 to 10 kg sec.

6. A snack product according to claim 4 or claim 5 wherein the cooked food piece contains ungelatinised starch.

7. A snack product according to claim 6, wherein the ungelatinised starch is present in an amount such that the first peak viscosity as measured by RVA pasting method (as described herein) is at least 1800 cP, optionally is at least 2000 cP, for example from 2400 to 3400cP.

8. A snack product according to any one of claims 4 to 7, wherein the snack product has a fat content not exceeding 30% by weight based on the total weight of the product.

9. A snack product according to any one of claims 4 to 8, wherein the cooked food piece is of curviplanar configuration forming a first, convexly curved surface and an opposed second concavely curved surface.

10. A snack product according to claim 9, wherein the cooked food piece has a thickness, as measured between said convex and concave surfaces, of from 1 to 5mm.

11. A snack product according to any one of claims 4 to 10, wherein the cooked food piece has a substantially uniform radius of curvature; and/or wherein the cooked food piece has a radius of curvature which varies across the food piece; and/or wherein the cooked piece is a curviplanar piece which is corrugated.

12. A snack product according to any one of claims 4 to 11, wherein the curviplanar configuration is such that the radius of curvature across at least a major part of the piece is in the range of from 15mm to 30mm.

13. A snack product according to any one of the claims 4 to 12, wherein at least one of the surfaces of the piece comprises an embossed pattern, for example, an embossed pattern comprising a plurality of ridges extending across at least one surface.

14. A snack product according to any one of claims 4 to 13 wherein the product has a moisture content of not more than 6%, by weight based on the total product weight; and/or wherein the sugar content is less than 10% by weight, preferably less than 5% by weight, based on the total product weight.

15. A bagged snack comprising a multiplicity of cooked food pieces according to any one of claims 4 to 14.
